# EUROPÄISCHE PATENTSCHRIFT

(11) **EP 2 265 485 B1**
(45) Veröffentlichungstag und Bekanntmachung des Hinweises auf die Patenterteilung: **02.09.2015**
(21) Anmeldenummer: 09729944.0
(22) Anmeldetag: 17.03.2009
(51) Int. Cl.: B62D 29/00, B60J 5/00, B22D 19/04

(54) **LEICHTBAUTEIL FÜR EINE FAHRZEUGKAROSSERIE**
LIGHTWEIGHT COMPONENT FOR A VEHICLE BODY
PIÈCE LÉGÈRE DESTINÉE À UNE CARROSSERIE DE VÉHICULE

(30) Priorität: 09.04.2008 DE 102008017977
(43) Veröffentlichungstag der Anmeldung: 29.12.2010
(73) Patentinhaber: Daimler AG, 70546 Stuttgart (DE)
(72) Erfinder: EIPPER, Konrad, 72108 Rottenburg (DE)
(74) Vertreter: JENSEN & SON
(86) Internationale Anmeldenummer: PCT/EP2009/001973
(87) Internationale Veröffentlichungsnummer: WO 2009/124639

(56) Entgegenhaltungen:
- EP-A- 0 836 983
- DE-A1- 4 242 896
- DE-A1- 10 044 619
- DE-A1- 19 623 463

## Beschreibung

Die Erfindung betrifft ein Leichtbauteil für eine Fahrzeugkarosserie nach dem Oberbegriff des Patentanspruchs 1.

Insbesondere für den Aufbau von Fahrzeugkarosserien werden teilweise Profilbauweisen gewählt, bei der einzelne Profilbauteile über Gussknoten miteinander verbunden sind. Die Verbindung zwischen Profilteilen und Gussknoten erfolgt dabei in der Regel über gängige Fügeverfahren wie Kleben oder Schweißen.

Dies bringt mehrere Nachteile mit sich. Zum einen müssen die einzelnen Bauteile mit zum Teil schwierig herzustellenden Fügeflächen versehen werden. Zum anderen ergeben sich je nach verwendetem Fügeverfahren Beeinträchtigungen der Festigkeit sowie der Materialeigenschaften im Bereich der Fügezonen. So entstehen beispielsweise bei Schweißverbindungen so genannte Wärmeeinflusszonen, in denen die Gitterstruktur der verschweißten Metallteile verändert ist, was im Allgemeinen zum erhöhten Auftreten von Materialspannungen führt. Dies kann ebenso zur Verringerung der Materialfestigkeit führen. Weiterhin werden die erreichbaren Fertigungstoleranzen in der Regel vom verwendeten Fügeverfahren limitiert. Schließlich führt die Montage von Karosserieteilen aus einer Vielzahl von Profil- und Gusselementen zu einem nachteilig hohen prozesstechnischen Aufwand bei der Produktion.

Aus der DE 199 31 741 A1 ist ein Kraftfahrzeugaufbau in Leichtbauweise bekannt, wobei in den Gussteilen eines Karosserieteiles Formtaschen vorgesehen sind, in welchen dann die Profilbauteile der Karosserie festlegbar sind.

Aus der DE 19623463 A1 ist ein Verfahren zum Fügen von Werkstücken bekannt, bei dem die zu verbindenden Metallteile in einer Druckgussform an den Fügestellen mit eingespritztem Metall verbunden werden.

Aus DE 10044619 A1, EP 0836983 A2 und DE 4242896 A1 sind Bauteile aus gegossenen Rahmenteilen und zwischen den Rahmenteilen angeordneten Hohlprofilen oder Verbindungsstreben bekannt. Die Profile oder Streben sind dabei an ihren Enden in die Rahmenteile eingegossen.

Aufgabe der vorliegenden Erfindung ist es also, ein Leichtbauteil für eine Fahrzeugkarosserie bereitzustellen, welches die Vorteile einer aus Gussknoten und Profilelementen bestehenden Leichtbauweise nutzt, dabei aber die nachteiligen Effekte beim Fügen der Guss- und Profilelemente vermeidet.

Diese Aufgabe wird gelöst durch ein Leichtbauteil mit den Merkmalen des Patentanspruchs 1.

Ein erfindungsgemäßes Leichtbauteil für eine Fahrzeugkarosserie bildet einen geschlossenen Rahmen, welcher als Gussbauteile ausgeführte Seitenteile und zumindest eine Querverbindung, sowie zumindest ein zwischen den Seitenteilen angeordnetes Verstärkungsprofil, oder Bauteil umfasst, wobei die gegenüberliegenden Endbereiche des Verstärkungsprofils zumindest an einer Seite in die Seitenteile eingegossen sind.

Ein solches Bauteil, beispielsweise ein Türträgerrahmen, ein Trägerrahmen für Heckklappe, Fronthaube oder Dach, kann also in einem einzigen Verfahrensschritt durch Umgießen der vorher bereitgestellten Profilbauteile oder Blechbauteile gefertigt werden. Je nach struktureller Aufgabe können die einzugießenden Bauteile Profil- oder Blechartig ausgestaltet sein, so dass profil- oder blechförmige Verstärkungsteile gebildet werden. Es sind keine kompliziert ausgestalteten Fügeflächen mehr nötig, da durch das Umgießen bereits eine stoff- und formschlüssige Verbindung zwischen den einzelnen Bauteilen erzielt wird. Durch den großflächigen Wärmeübergang zwischen Schmelze und Profilbauteil beim Umgießen dieses Bauteils wird weiterhin die Entstehung von Wärmeeinflusszonen und Materialspannungen, wie sie andere Fügeverfahren mit sich bringen, vermieden. Die Vorpositionierung der Profilbauteile in entsprechenden Ausnehmungen der Gussform ermöglicht weiterhin eine lagegenaue Fertigung des Bauteiles mit geringen Toleranzen als bei Fertigungsverfahren nach dem Stand der Technik.

In einer bevorzugten Ausführungsform ist zumindest ein Profilbauteil als Querträger oder Längsträger in dem erfindungsgemäßen Leichtbauteil angeordnet. Dadurch kann eine besonders vorteilhafte Kraftleitung in selbsttragenden Karosseriebauteilen erzielt werden.

In einer weiteren Ausführungsform der Erfindung verläuft zumindest ein Verstärkungsprofil schräg zwischen den Quer- bzw. Längsträgern des Leichtbauteils. Solche schräg verlaufenden Profile erhöhen auf vorteilhafte Weise die Crashsicherheit von Karosseriebauteilen, indem sie beim Aufprall eines Objekts auf ein solches Bauteil auftretende Kräfte zu den seitlich angeordneten Gussknoten ableiten.

In einer alternativen Ausführungsform ist das verwendete Gussteil einteilig ausgeführt, beide Seitenteile, sowie zumindest eine Querverbindung zwischen den Seitenteilen werden also in einer einzigen Kavität einer Gussform gegossen. Zur weiteren Verstärkung des Karosseriebauteils ist zumindest eine weitere Querverbindung in Form eines Verstärkungsprofils oder -blechs vorgesehen, deren Endbereiche in die gegossenen Seitenteile eingegossen sind. Die einteilige Ausführung des Gussbauteils führt zu einer besonders stabilen Ausführung, indem die Zahl der Fügebereiche weiter reduziert und somit Materialspannungen weiter vermieden werden. Weiterhin ist die Herstellung eines solchen Teils besonders einfach, da keine komplizierten Gussformen mit mehreren Kavitäten bereitgestellt werden müssen.

In einer alternativen Ausführungsform ist der Gussanteil des Leichtbauteils zweiteilig gestaltet, wobei nur die Seitenteile des Bauteils gegossen sind, und über zumindest zwei Verstärkungsprofile miteinander verbunden sind. Dem höheren Aufwand beim Guss in einer Gussform mit zumindest zwei Kavitäten steht vorteilhaft ein Gewichtsvorteil des fertigen Leichtbauteils gegenüber.

In einer bevorzugten Ausführungsform ist das Leichtbauteil als Türträgerrahmen ausgebildet, wobei der oben liegende Fensterrahmen durch ein Verstärkungsprofil gebildet ist, während der restliche Anteil des Rahmens als einstückiges Gussbauteil ausgeführt ist. Eine solche Bauweise bietet einen vorteilhaften Kompromiss aus hoher mechanischer Festigkeit in Bereichen hoher Beanspruchung und geringem Materialgewicht in gering beanspruchten Bereichen.

In einer alternativen Ausführungsform ist das Leichtbauteil als Türrahmen ausgebildet, bei dem zwei getrennte gegossene Seitenteile durch drei Verstärkungsprofile verbunden sind. Eine solche Anordnung bietet insbesondere im Falle eines Seitenaufpralls eine vorteilhafte Ableitung der einwirkenden Kräfte über die Profilbauteile auf die säulenseitig angeordneten Gussbauteile.

In einer weiteren Ausführungsform ist das Leichtbauteil als Türträgerrahmen ausgebildet, wobei zwei seitliche Gussbauteile durch drei als Querverbindungen ausgebildete Profilbauteile verbunden sind, und zumindest ein weiteres Verstärkungsprofil schräg zwischen dem unteren und dem mittleren Profilbauteil angeordnet ist. Hierdurch kann vorteilhaft eine weiter erhöhte Seitenaufprallfestigkeit erzielt werden.

In einer besonders bevorzugten Ausführungsform ist der gegossene Teil des Rahmens als Aluminium- oder Magnesiumdruckgussbauteil ausgeführt. Damit kann ein besonders vorteilhafter Kompromiss zwischen Materialgewicht und mechanischen Werkstoffeigenschaften erzielt werden.

In einer weiteren bevorzugten Ausführungsform sind die Verstärkungsprofile als Strangpressprofile oder Gussprofile aus einer Aluminium- oder Magnesiumlegierung ausgeführt. Eine solche Ausführung kombinierte einfache Herstellbarkeit, geringes Gewicht, sowie optimale Eigenschaften des Fügebereichs, da die Verstärkungsprofile im Wesentlichen aus dem gleichen Material wie die Gussbauteile bestehen.

In einer alternativen Ausführungsform können die Verstärkungsprofile weiterhin aus profiliertem Stahlblech oder Stahlguss bestehen. Bei dieser Ausführungsform wird ein höheres Gewicht der Verstärkungsprofile in Kauf genommen, um beispielsweise in mechanisch kritischen Bereichen eine höhere Festigkeit zu erzielen.

In einer besonders bevorzugten Ausführungsform ist das Leichtbauteil als Rahmenbauteil ausgeführt, an dem Fügeflächen zum Anbringen einer Beplankung aus Leichtmetallblech, Stahlblech oder Kunststoff vorgesehen sind. Damit wird eine prozesstechnisch besonders einfache einschrittige Montage beispielsweise einer Außenbeplankung eines Karosserieteils an einen bereitgestellten Rahmen ermöglicht.

Zur Herstellung eines erfindungsgemäßen Karosseriebauteils wird ein erfindungsgemäßes Verfahren nach Patentanspruch 8 eingesetzt. Bei einem solchen Verfahren wird zumindest ein Verstärkungsprofil so in eine Gießform für ein Leichtbauteil eingelegt, dass die Endbereiche des Verstärkungsprofils in die Kavitäten der Gießform ragen und beim Guss von der Schmelze umgossen werden. Durch die Vorpositionierung des zumindest einen Verstärkungsprofils in der Gießform werden dabei vorteilhaft besonders gute Fertigungstoleranzen erzielt. Der sich ergebende Form- und Stoffschluss zwischen dem gegossenen Anteil des erfindungsgemäßen Bauteils und dem Verstärkungsprofil weist weiterhin aufgrund des großflächigen Wärmeübertritts zwischen Gussmasse und Profilteil besonders gute Werkstoffeigenschaften, insbesondere sehr geringe Materialspannungen, auf.

In einer besonders bevorzugten Ausführungsform des Verfahrens wird der Druckguss mit einer Aluminium- oder Magnesiumdruckgusslegierung durchgeführt. Durch solche Verfahren können insbesondere sehr dünnwandige und dennoch formstabile Gussteile hergestellt werden.

In einer weiteren Ausführungsform des Verfahrens wird eine Gießform verwendet, welche lediglich eine Gießkavität aufweist, so dass die Seitenteile sowie zumindest ein quer verlaufendes Verbindungsteil des Leichtbauteiles einstückig gegossen werden. Dies vereinfacht den Gießvorgang verglichen mit der zweistückigen Ausführung des Gussanteils des Leichtbauteiles, da nur eine Kavität und somit auch nur ein Angusssystem zur Verfügung gestellt werden muss.

In einer weiteren Variante des Verfahrens wird das zwischen den Endstücken liegende Mittelteil des Verstärkungsprofils beim Guss zumindest teilweise eingegossen. Dadurch werden komplexere Bauteilgeometrien ermöglicht, und die Herstellung von besonders stabilen Leichtbauteilen dem Verfahren zugänglich gemacht.

Vorteilhafte Ausführungen von erfindungsgemäßen Leichtbauteilen werden nun anhand der beigefügten Zeichnungen weiter beschrieben. Dabei zeigen
- Fig. 1 bis 4: Leichtbauteile, die als Kraftfahrzeugtür ausgeführt sind in einer Seitenansicht,
- Fig. 5: eine Trägerstruktur einer Motorhaube oder einer Heckklappe,
- Fig. 6: eine schematische Seitenansicht einer ausgeführten Heckklappe.

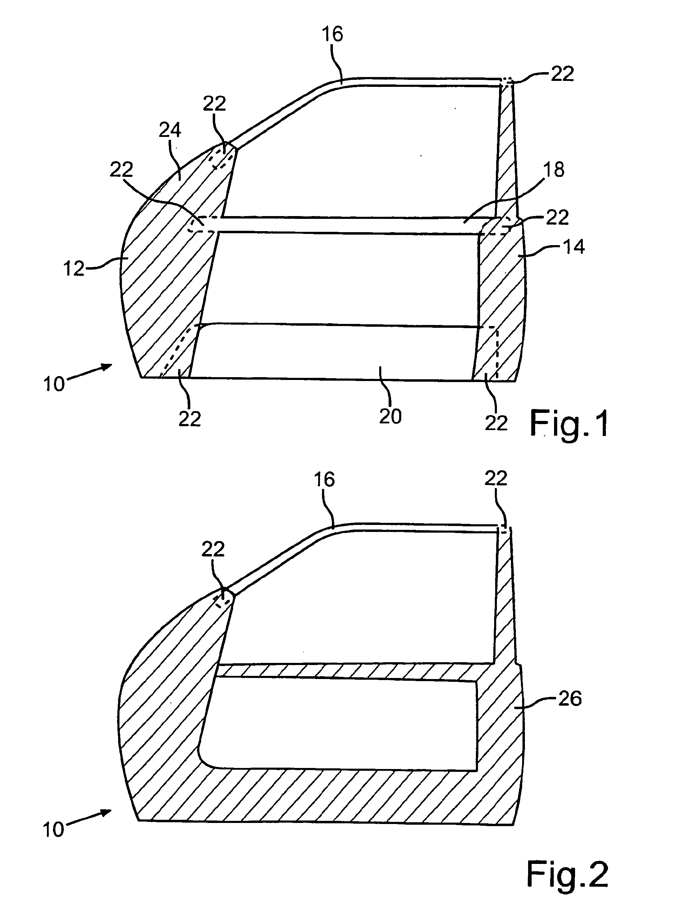

In Fig. 1 ist zum besseren Verständnis der Erfindung zunächst ein aus dem Stand der Technik bekannter als Leichtbauteil ausgeführter Türträger in einer schematischen Seitenansicht dargestellt. Der im Ganzen als 10 bezeichnete Türträger besteht aus zwei als Gussteilen ausgeführten Seitenteilen 12 und 14, wobei das Seitenteil 12 bei der fertigen Tür über ein Schwenkelement an der A-Säule des Kraftfahrzeugs festgelegt ist, und das Seitenteil 14 im eingebauten Zustand die B-Säule des Kraftfahrzeugs überlappt. Die Seitenteile 12 und 14 sind über Verstärkungsprofile miteinander verbunden, wobei ein oberes Verstärkungsprofil 16 im Bereich der Fensteroberkante verläuft, ein mittleres Verstärkungsprofil 18 die Seitenteile 12 und 14 in Höhe der Bordwandkante verbindet und ein unteres Verstärkungsteil 20 in Längsrichtung des Türträgers auf Höhe der Türunterkante verläuft. Die Endbereiche 22 der Verstärkungsprofile 16, 18, 20 sind dabei mit den Gussteilen 12 und 14 umgossen und damit stoff- und formschlüssig mit diesen verbunden. Die Gussteile 12 und 14 erstrecken sich dabei über den Bereich der Bordwandkante hinaus, insbesondere umfasst das Gussteil 12 auch den Bereich des Spiegeldreiecks 24.

Die Gussteile 12 und 14 sind dabei so ausgeführt, dass sie Befestigungsvorrichtungen für weitere Bestandteile der Fahrzeugtür zur Verfügung stellen. Insbesondere sind in der Zeichnung nicht dargestellte Fügeflansche zum Befestigen einer Außenbeplankung sowie einer Innenverkleidung vorgesehen. Am zur A-Säule des Fahrzeugs gerichteten Gussteil 12 ist weiterhin ein Festlegungsbereich für den türseitigen Teil eines Scharniers vorgesehen.

Fig. 2 zeigt eine alternative Ausführung eines erfindungsgemäßen Türträgers. Hierbei sind sowohl die Seitenbereiche als auch die an der Türunterkante, sowie die in Höhe der Bordwandkante verlaufende Querverstrebung als einteiliges Gussteil 26 ausgeführt. Ein Verstärkungsprofil 16 verbindet die oberen Endbereiche der Seitenteile in Höhe der Türoberkante, und ist mit seinen Endbereichen 22 in das Gussbauteil 26 eingegossen.

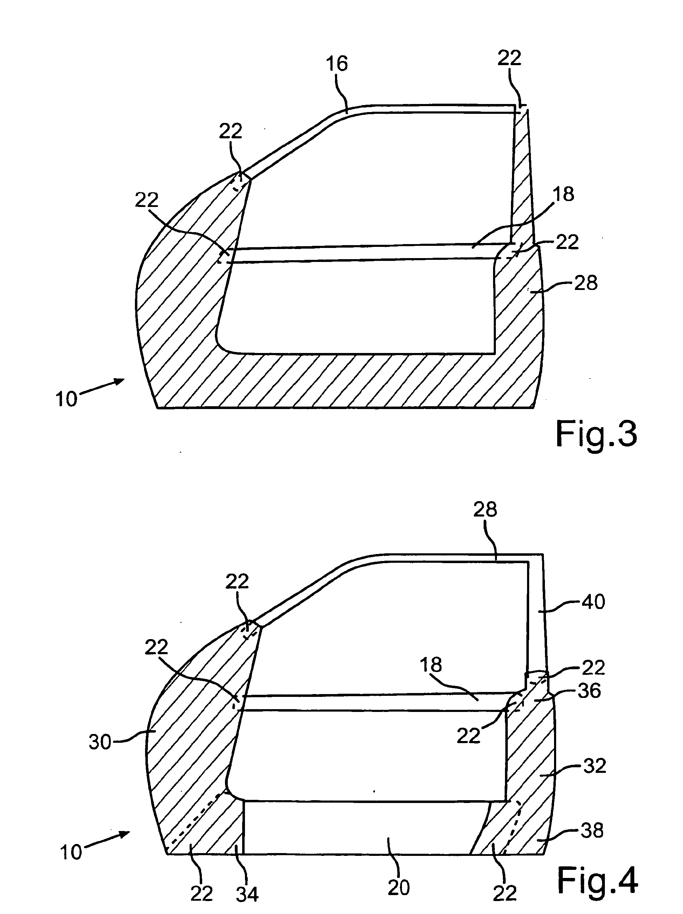

Fig. 3 zeigt eine erfindungsgemäße Ausführungsform eines Türträgers, in welchem wiederum die beiden Seitenteile, sowie die an der Türunterkante verlaufende Querverstrebung als einteiliges Gussteil 28 ausgeführt ist. In Höhe der Türoberkante, sowie in Höhe der Bordwandkante sind weitere, als Verstärkungsprofil ausgeführte Querverstrebungen 16 und 18 angeordnet, welche mit ihren Endbereichen 22 in das Gussbauteil 28 eingegossen sind.

Fig. 4 zeigt eine weitere aus dem Stand der Technik bekannte Ausführungsform eines Türträgers, bei dem die Seitenteile wiederum als getrennte Gussbauteile ausgeführt sind. Das zur A-Säule des Kraftfahrzeugs gerichtete Gussbauteil 30 ist dabei leicht gewinkelt ausgeführt und bildet in seinem unteren Bereich 34 einen Teil der an der Türunterkante verlaufenden Querverstrebung. Das zur B-Säule gerichtete Gussbauteil 32 ragt in seinem oberen Bereich 36 nur unwesentlich über die Bordwandkante hinaus, der untere Bereich 38 des Gussbauteils 32 ist wiederum abgewinkelt und bildet einen Teil der an der Türunterkante verlaufenden Querverstrebung. Ein Verstärkungsprofil 20 ist mit seinen Endbereichen 22 in die unteren Bereiche 34, 38 der Gussbauteile 30, 32 eingegossen und vervollständigt die an der unteren Türkante verlaufende Querverstrebung. Zwei weitere Verstärkungsprofile 18, 28 verbinden die Seitenteile 30 und 32 auf Höhe der Bordwandkante bzw. an der Fensteroberkante. Das an der Fensteroberkante verlaufende Verstärkungsprofil 28 ist dabei abgewinkelt und bildet mit einem senkrecht verlaufenden Bereich 40 einen Teil des zur B-Säule gerichteten Seitenteiles. Der Endbereich 22 des senkrecht verlaufenden Teiles 40 ist dabei in den oberen Bereich 36 des Gussbauteils 32 eingegossen.

Bei getrennten Gussbauteilen kann generell auch nur eines der Gussteile mit eingegossenen Profil- oder Blechteilen ausgelegt sein.

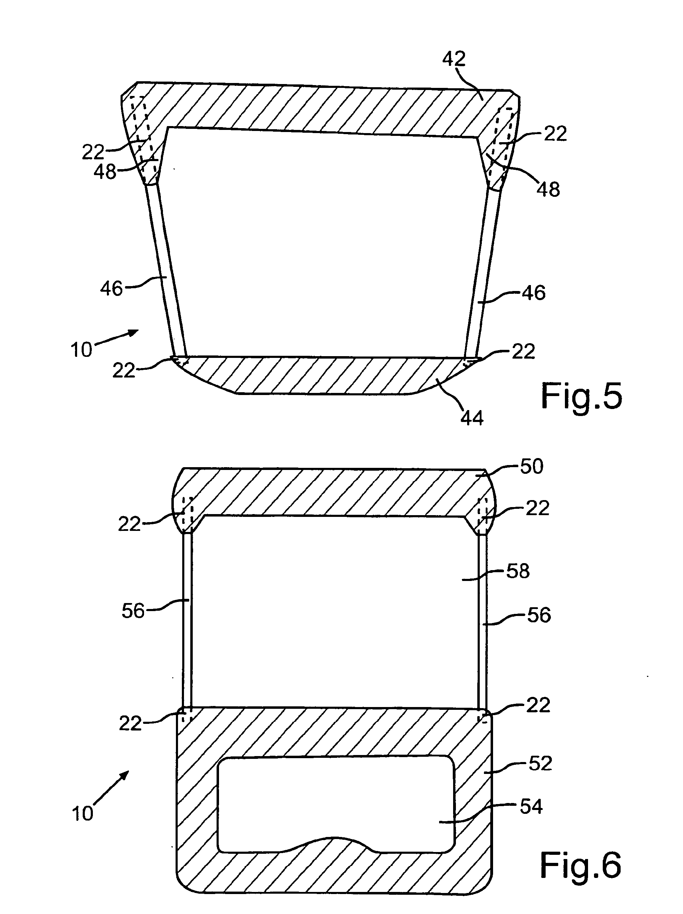

Fig. 5 zeigt ein weiteres aus dem Stand der Technik bekanntes Leichtbauteil, welches als Tragrahmenstruktur für eine Motorhaube ausgelegt ist. Zwei Gussbauteile 42 und 44 sind dabei über in Längsrichtung verlaufende Verstärkungsprofile 46 verbunden, wobei die Endbereiche 22 der Verstärkungsprofile 46 von den Gussbauteilen 42 und 44 stoff- und formschlüssig umgossen sind. Am scharnierseitigen Gussbauteil 42 des Motorhaubenträgers sind weiterhin Vorsprünge 48 ausgebildet, die einen weiteren Bereich der Verstärkungsprofile 46 umschließen, um so eine weitere Stabilisierung zu erzielten. An den Gussbauteilen 42 und 44 sind nicht gezeigte Befestigungselemente angeordnet, insbesondere Fügeflansche für die Außenbeplankung der Motorhaube oder einer Heckklappe, sowie Befestigungsvorrichtungen für eine versteifende Innenstruktur derselben. Das scharnierseitige Gussbauteil 42 trägt weiterhin Festlegungsbereiche für die Haubenscharniere, das zur Fahrzeugfront weisende Gussbauteil 44 die entsprechenden Befestigungselemente für ein Haubenschloss.

Fig. 6 zeigt ein weiteres aus dem Stand der Technik bekanntes Ausführungsbeispiel für ein als Heckklappenrahmen ausgelegtes Leichtbauteil. Dieses besteht aus zwei Gussbauteilen 50 und 52, wobei das Gussbauteil 52 selbst als geschlossener Rahmen ausgeführt ist, der eine Aussparung 54 umschließt. Die Gussbauteile 50 und 52 sind über in Fahrzeuglängsrichtung verlaufende Verstärkungsprofile 56 verbunden, deren Endbereiche 22 von den Gussbauteilen 50 und 52 stoff- und formschlüssig umgossen sind. Die Bauteile umschließen eine Aussparung 58, die zur Aufnahme eines Heckklappenfensters dient. Neben den auch hier anzubringenden Befestigungsvorrichtungen für Außenbeplankung, Innenverkleidung sowie Klappenscharnieren und Klappenschloss sind daher bei dieser Anordnung zusätzlich auf die Aussparung 58 hin gerichtete Dichtungsflansche zur abgedichteten Anbringung einer Heckscheibe vorgesehen.

Selbstverständlich wird der Fachmann noch weitere Anwendungsmöglichkeiten für erfindungsgemäße Leichtbauteile im Karosseriebau erkennen, so zum Beispiel Dachträgerrahmen, Fahrzeughintertüren, oder auch fensterlose Heckklappen.

## Patentansprüche

1. Leichtbauteil für eine Karosserie oder ein Karosseriebauteil eines Kraftfahrzeuges, wobei das Leichtbauteil einen geschlossenen Rahmen bildet und zumindest teilweise als Gussbauteil ausgeführte Seitenteile (12, 14) aus einer Aluminium- oder Magnesium-Druckgusslegierung umfasst sowie zumindest ein zwischen diesen Seitenteilen angeordnetes Verstärkungsprofil oder Verstärkungsblech (16, 18, 20) umfasst,
wobei die gegenüberliegenden Endbereiche (22) des Verstärkungsprofils, oder -blechs (16, 18, 20) durch Umgießen stoff- und formschlüssig mit beiden Seitenteilen (12, 14) verbunden sind,
**dadurch gekennzeichnet, dass**
die Verstärkungsprofile oder -bleche (16, 18, 20) als profilierte Stahlbleche oder Stahlgussprofile ausgeführt sind, wobei die beiden Seitenteile (12, 14) und zumindest eine Querverbindung zwischen den Seitenteilen einteilig gegossen sind.

2. Leichtbauteil (10) nach Anspruch 1,
**dadurch gekennzeichnet, dass**
zumindest ein Verstärkungsprofil oder -blech (16, 18, 20) bezüglich der Karosserie als Querträger oder Längsträger angeordnet ist.

3. Leichtbauteil (10) nach Anspruch 2,
**dadurch gekennzeichnet, dass**
zumindest ein weiteres Verstärkungsprofil oder -blech schräg zwischen den Querträgern bzw. Längsträgern verläuft.

4. Leichtbauteil (10) nach einem der vorhergehenden Ansprüche,
**dadurch gekennzeichnet, dass**
das Leichtbauteil (10) als Türträgerrahmen ausgebildet ist, wobei der in der Nähe der Fensteroberkante verlaufende Querträger als Verstärkungsprofil oder -blech (16) ausgebildet ist.

5. Leichtbauteil (10) nach Anspruch 4,
**dadurch gekennzeichnet, dass**
zwei gegossene Seitenteile (12, 14) über ein in Höhe der Türunterkante verlaufendes Verstärkungsprofil (20), sowie über ein in Höhe der Bordwandkante verlaufendes Verstärkungsprofil oder -blech (18) und in der Nähe der Fensteroberkante verlaufendes Verstärkungsprofil (16) verbunden sind.

6. Leichtbauteil (10) nach Anspruch 4 oder 5,
**dadurch gekennzeichnet, dass**
ein weiteres Verstärkungsprofil oder -blech schräg zwischen einem unteren und einem mittleren Querträger angeordnet ist.

7. Leichtbauteil (10) nach einem der vorhergehenden Ansprüche,
**dadurch gekennzeichnet, dass**
das Leichtbauteil als Trägerrahmen ausgeführt ist, an welchen über Fügeflächen eine Beplankung aus Leichtmetallblech, Stahlblech oder Kunststoff anbringbar ist.

8. Verfahren zum Herstellen von Leichtbauteilen (10) für eine Karosserie eines Kraftwagens, wobei die Leichtbauteile (10) zumindest einen geschlossenen Rahmen mit zwei Seitenteilen aufweisen, umfassend die Schritte:
- Bereitstellen zumindest eines profil- oder blechförmigen Verstärkungsteils als profiliertes Stahlblech oder Stahlgussprofil
- Einbringen des zumindest einen Verstärkungsteils in eine Gießform, welche mindestens eine Gießkavität für den gegossenen Anteil des Leichtbauteiles enthält, so dass die Endbereiche (22) des zumindest einen Verstärkungsteils in die zumindest eine Gießkavität der Gießform hineinragen,
- Vergießen als Druckgussverfahren mit einer Aluminium- oder Magnesium-Druckgusslegierung, so dass die Endstücke (22) des zumindest einen Verstärkungsteils form- und stoffschlüssig in die beiden Seitenteile eingegossen werden
**dadurch gekennzeichnet, dass**
beide Seitenteile, sowie zumindest eine Querverbindung zwischen den Seitenteilen in einer einzigen Kavität einer Gussform gegossen werden.

9. Verfahren nach Anspruch 8,
**dadurch gekennzeichnet, dass**
ein zwischen den Endstücken (22) liegendes Mittelteil des Verstärkungsteils zumindest teilweise umgossen wird.

## Claims

1. Light-weight component for a body or a body part of a motor vehicle,
wherein the light-weight component forms a closed frame and comprises side parts (12, 14) produced at least partially as castings from an aluminium or magnesium die-casting alloy as well as at least one reinforcement profile or reinforcement plate (16, 18, 29) located between these side parts,
wherein the opposite end regions (22) of the reinforcement profile or plate (16, 18, 29) are, by adhesive force and positively, joined to both side parts (12, 14) by casting round,
**characterised in that**
the reinforcement profiles or plates (16, 18, 29) are produced as profiled steel sheets or cast steel profiles, the two side parts (12, 14) and at least one cross-connection between the side parts being cast as a single piece.

2. Light-weight component (10) according to claim 1,
**characterised in that**
at least one reinforcement profile or plate (16, 18, 29) is arranged as a crossmember or a side member in respect to the body.

3. Light-weight component (10) according to claim 2,
**characterised in that**
at least one further reinforcement profile or plate extends at an angle between the crossmembers or side members.

4. Light-weight component (10) according to any of the preceding claims,
**characterised in that**
the light-weight component (10) is designed as a door support frame, the crossmember extending near the upper edge of the window being designed as reinforcement profile or plate (16).

5. Light-weight component (10) according to claim 4,
**characterised in that**
two cast side parts (12, 14) are joined via a reinforcement profile (20) extending at the level of the lower edge of the door, a reinforcement profile or plate (18) extending at the level of the side board edge and a reinforcement profile (16) extending near the upper edge of the window.

6. Light-weight component (10) according to claim 4 or 5,
**characterised in that**
a further reinforcement profile or plate is arranged at an angle between a lower and a central crossmember.

7. Light-weight component (10) according to any of the preceding claims,
**characterised in that**
the light-weight component is designed as a support frame to which a cladding light alloy sheeting, sheet steel or plastic can be applied via joint surfaces.

8. Method for producing light-weight components (10) for a body of a motor vehicle, the light-weight components (10) comprising at least a closed frame with two side parts, the method comprising the steps of:
- the provision of at least one profiled or sheet metal reinforcement part in the form of profiled sheet steel or a cast steel profile,
- the placing of the at least one reinforcement part in a casting mould having at least one cavity for the cast proportion of the light-weight component, so that the end regions (22) of the at least one reinforcement part project into the at least one cavity of the casting mould,
- the casting in a die-casting process with an aluminium or magnesium die-casting alloy, so that the end pieces (22) of the at least one reinforcement part are cast into the two side parts positively and by adhesive force,
**characterised in that**
both side parts as well as at least one cross-connection between the side parts are cast in a single cavity of a casting mould.

9. Method according to claim 8,
**characterised in that**
a central part of the reinforcement part placed between the end pieces (22) is at least partially cast around.

## Revendications

1. Pièce légère destinée à une carrosserie de véhicule automobile, ladite pièce légère formant un châssis fermé et comprenant au moins en partie des parties latérales (12, 14) réalisées sous la forme de pièce coulée dans un alliage à coulée sous pression de magnésium ou d'aluminium et comprenant au moins une tôle de renfort (16, 18, 20) ou un profilé de renfort disposé entre lesdites parties latérales, les zones d'extrémité (22) en regard du profilé de renfort ou les tôles (16, 18, 20) étant reliées par complémentarité de forme ou de force par refonte aux deux parties latérales (12, 14), **caractérisée en ce que** les profilés ou les tôles (16, 18, 20) de renfort sont réalisés comme des tôles d'acier profilés ou des tôles en acier coulé, les deux parties latérales (12, 14) et au moins une traverse étant coulées en un seul tenant entre les parties latérales.

2. Pièce légère (10) selon la revendication 1, **caractérisée en ce qu'**au moins un profilé ou une tôle de renfort (16, 18, 20) est disposé par rapport à la carrosserie en tant que traverse ou en tant que longeron.

3. Pièce légère (10) selon la revendication 2, **caractérisée en ce qu'**au moins un autre profilé ou une autre tôle de renfort s'étend en biais entre les traverses ou les longerons.

4. Pièce légère (10) selon l'une quelconque des revendications précédentes, **caractérisée en ce que** la pièce légère (10) est réalisée en tant que cadre-support de porte, le longeron s'étend à proximité du bord supérieur de fenêtre est réalisée comme un profilé ou une tôle de renfort (16).

5. Pièce légère (10) selon la revendication 4, **caractérisée en ce que** deux parties latérales (12, 14) coulées sont reliées au moyen d'un profilé de renfort (20) s'étendant à la hauteur du bord inférieur de porte, et au moyen d'un profilé ou une tôle (18) de renfort s'étendant à la hauteur du bord de paroi de bord et à proximité du profilé de renfort (16) s'étendant à proximité du bord supérieur de fenêtre.

6. Pièce légère (10) selon la revendication 4 ou la revendication 5, **caractérisée en ce qu'**un autre profil ou une autre tôle de renfort est disposée en biais entre une traverse centrale et une traverse inférieure.

7. Pièce légère (10) selon l'une quelconque des revendications précédentes, **caractérisée en ce que** la pièce légère est réalisée en tant que cadre de support sur lequel peut venir s'appliquer une plaque de protection en tôle de métal léger, en tôle d'acier ou en matière synthétique sur les surfaces de joint.

8. Procédé de fabrication de pièces légères (10) destinées une carrosserie d'un véhicule automobile, les pièces légères (10) présentant au moins un châssis fermé doté de deux parties latérales, comprenant les étapes suivantes :
- la préparation d'au moins une partie de renfort en forme de profilé ou de tôle en tant que tôle d'acier profilé ou profilé en acier coulé,
- l'introduction de l'au moins une partie de renfort dans un moule, qui comprend au moins une cavité de coulée pour la partie coulée de la pièce légère, de sorte que les parties d'extrémité (22) de l'au moins une partie de renfort dépassent dans l'au moins une cavité de coulée du moule,
- la coulée en tant que procédé de coulée par pression à l'aide d'un alliage à coulée sous pression d'aluminium ou de magnésium, de sorte que les pièces d'extrémité (22) de l'au moins une partie de renfort soient coulées par complémentarité de forme ou de force dans les deux parties latérales, **caractérisé en ce que** les deux parties latérales, ainsi qu'au moins une traverse sont coulées entre les parties latérales dans une seule cavité d'un moule de fonte.

9. Procédé selon la revendication 8, **caractérisé en ce qu'**un élément central de la partie de renfort disposé entre les pièces d'extrémité (22) est refondu au moins en partie.
